# EUROPEAN PATENT APPLICATION

(11) **EP 3 495 854 A2**
(43) Date of publication of application: **12.06.2019**
(21) Application number: 18208076.2
(22) Date of filing: 23.11.2018
(51) Int. Cl.: G02B 3/08, G02B 5/00

(54) **METHOD OF FORMING FILM OF LENS AND FRESNEL LENS**

(30) Priority: 06.12.2017 JP 2017233994; 28.09.2018 JP 2018183081
(71) Applicant: Panasonic Intellectual Property Management Co., Ltd., Osaka-shi, Osaka 540-6207 (JP)
(72) Inventor: ABE, Takayuki, Osaka, 540-6207 (JP)
(74) Representative: Vigand, Philippe

(57) **Abstract**

A Fresnel lens includes a Fresnel lens body, grooves formed on the lens surface of the Fresnel lens body and having bottom surfaces and inclined surfaces and a light absorber formed over the inclined surfaces and the bottom surfaces in which a contact angle at an end portion of the light absorber with respect to the bottom surface is larger than 70 degrees is used. A method of forming a film of a lens includes coating inclined portions of a plurality of grooves formed on a lens surface with ink, fixing the ink and removing unnecessary portions of the ink by laser.

## Description

### TECHNICAL FIELD

The technical field relates to a method of forming a film of a lens and a Fresnel lens.

### BACKGROUND

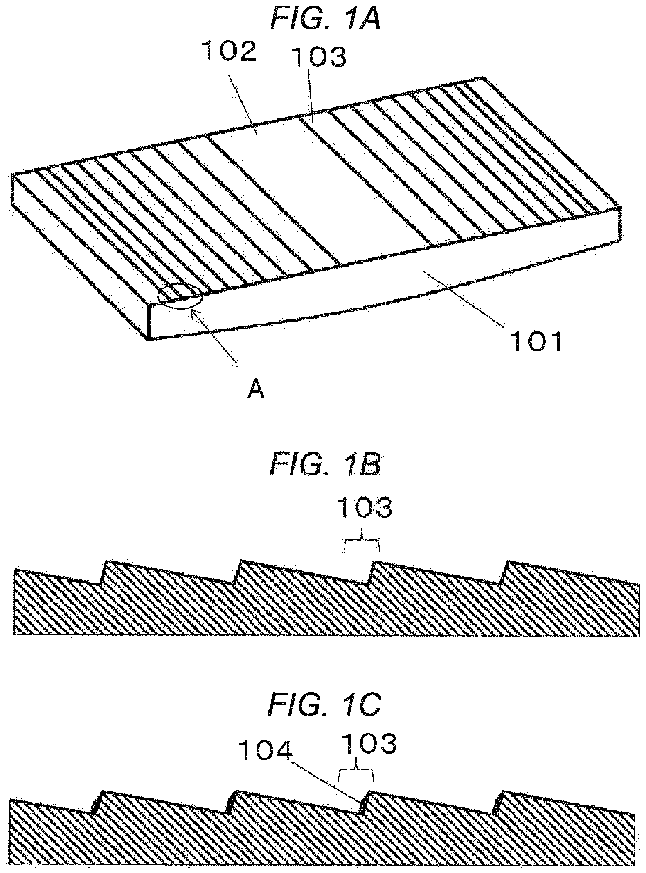

As an optical member for displaying video and the like by extending a light source, a Fresnel lens is used. In the Fresnel lens, a plurality of grooves are formed in parallel straight lines on a lens surface 102 of a Fresnel lens 101 as shown in a perspective view of Fig. 1A. A cross-sectional view obtained by enlarging a portion A of the lens surface 102 in Fig. 1A is shown in Fig. 1B. As shown in the cross-sectional view, the grooves 103 on the lens surface 102 of the Fresnel lens 101 form side walls which are not vertical but slightly inclined.

There has been a case where optical characteristics are deteriorated when a projection light is radiated in the Fresnel lens 101. That is because the projection light is reflected on side walls of the grooves 103 formed on the lens surface 102 of the Fresnel lens 101 and the reflected light becomes scattered light inside the Fresnel lens 101 thereby causing deterioration of optical characteristics when the projection light is incident on the lens surface 102 of the Fresnel lens 101.

Accordingly, in order to suppress the scattered light on the side walls of the grooves 103, there is disclosed in JP-A-H4-163539 (Patent Literature 1) that a light absorber 104 is applied on the side walls of the grooves 103 formed on the lens surface 102 of the Fresnel lens 101 as in a cross-sectional view of the Fresnel lens 101 shown in Fig. 1C.

As a method of forming the light absorber 104 on the side walls of the grooves 103 formed on the lens surface 102 of the Fresnel lens 101, there is a method of forming the light absorber 104 by sticking a film in which the light absorber 104 is formed to each other as described in, for example, JP-A-S58-186732 (Patent Literature 2).

However, positioning and so on are necessary when the film in which the light absorber 104 is formed is stuck to each other, therefore, the method is limited to lenses in which the grooves 103 have a certain degree of size.

Moreover, the film in which the light absorber 104 is formed has to be fabricated for each design of the Fresnel lens 101, which takes cost and time for obtaining the grooves 103 with an arbitrary shape.

It is necessary to form a large number of grooves 103 with an arbitrary minute shape for reducing the size and improving characteristics of the Fresnel lens 101, and a method of forming the light absorber 104 that blocks light on side walls of the grooves 103 is required.

In recent years, as a method of forming a fine pattern at low cost in a simple manner, a coating method using ink jet is widely used. The coating method using ink jet is a method of performing coating by discharging a small amount of ink to prescribed positions from plural nozzles provided in coating heads of an ink-jet apparatus. Ink containing the light absorber 104 is discharged to groove inclined portions on the lens surface 102 of the Fresnel lens by the ink-jet method, thereby forming the light absorber 104 on side walls of minute grooves formed at arbitrary positions of the Fresnel lens.

However, the ink discharged by ink jet is generally directed to a vertical direction, therefore, an object to be coated by ink jet is a flat shape. Accordingly, it is difficult to coat the side walls of the grooves 103 in the Fresnel lens 101 with ink.

Accordingly, as a method of coating a side wall of an object by ink jet, a method shown in JP-A-2008-263094 (Patent Literature 3) is proposed. A side view of Fig. 2A shows a coating method by ink jet according to Patent Literature 3.

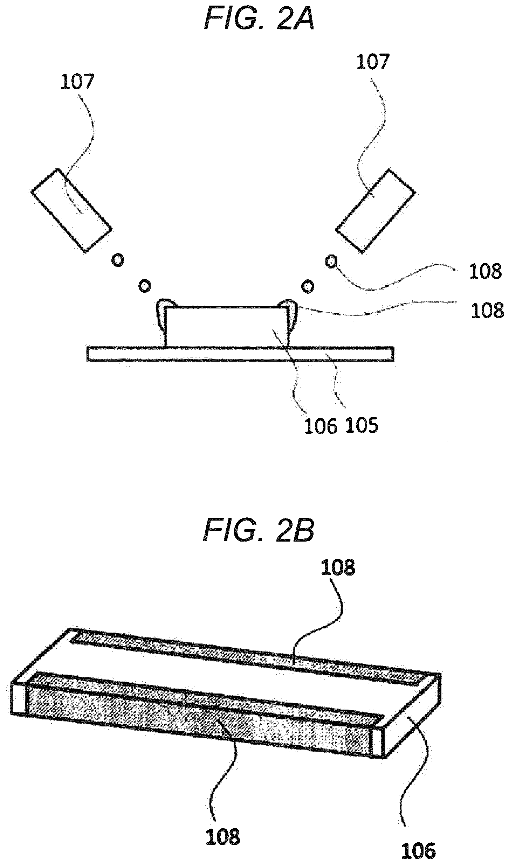

In Fig. 2A, a strip-like insulator as an object 106 is set on a conveying belt 105. Coating heads 107 of ink jet are installed obliquely upward. A paste 108 for a side-surface electrode is discharged from the coating heads 107 from oblique directions toward side surfaces of the object 106. The side surfaces of the strip-like object 106 are coated with the paste 108 for the side-surface electrode.

Fig. 2B is a perspective view showing a state after the strip-like insulator as the object 106 is coated with the paste 108 for the side-surface electrode. As the paste 108 for the side-surface electrode is discharged from oblique directions while conveying the strip-like insulator on the conveying belt, the entire side walls of the strip-like object 106 can be coated with the paste 108 for the side-surface electrode.

A coating method used when the side walls of the grooves 103 of the Fresnel lens 101 are coated by the method shown in Patent Literature 3 is shown in Fig. 3A. A Fresnel lens 110 is installed in a jig 111 for conveyance. Then, an ink-jet coating head 112 is installed obliquely upward of the jig 111 for conveyance.

According to the structure, an ink 113 containing the light absorber 104 is discharged obliquely from the coating head 112 while moving the jig to which the Fresnel lens 101 is fixed.

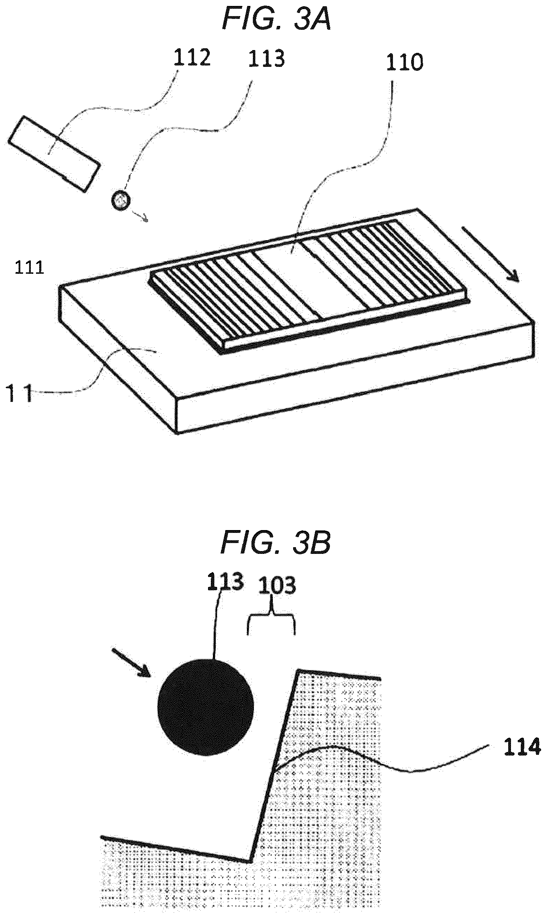

A cross-sectional view of Fig. 3B is a view showing a case where the ink 113 containing the light absorber 104 is discharged to a side wall 114 of the groove 103 in the Fresnel lens 110. The ink 113 containing the light absorber 104 is discharged toward the side wall 114 of the groove 103 in the Fresnel lens 110. Accordingly, the light absorber 104 is hit on the side wall 113. After the ink 113 containing the light absorber 104 is hit on the side wall 114 of the groove 103 in the Fresnel lens 110, the light absorber 104 is formed on the side wall 114 of the groove through drying, curing and so on.

### SUMMARY

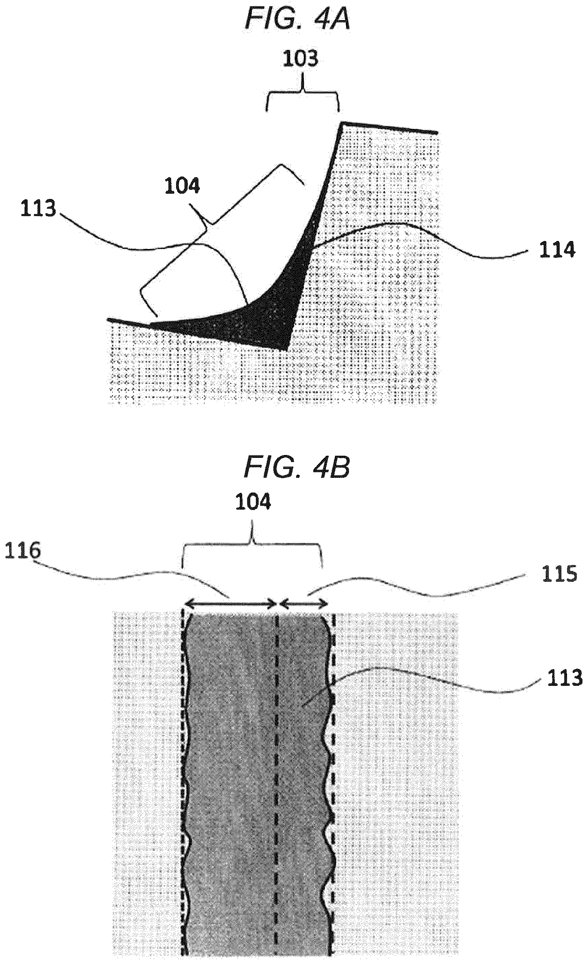

Fig. 4A shows a cross-sectional view showing a case where the light absorber 104 is formed on the side wall 114 of the groove 103 in the Fresnel lens 101 by the method shown in Patent Literature 3. As shown in the cross-sectional view, after the ink 113 containing the light absorber 104 is hit on the side wall 114 by ink jet, the ink 113 flows to a lower bottom surface of the side wall 114 along the side wall 114. After that, the ink 113 is spread further from the bottom surface. Accordingly, the light absorber 104 is wetly spread not only to a width of the side wall 114 but also over a large distance from the bottom surface.

Fig. 4B shows a top view showing a case where the light absorber 104 is formed on the side wall 114 of the groove 103 in the Fresnel lens 101. As shown in the top view, the light absorber 104 is formed not only in a width 115 of the side wall 114 of the Fresnel lens 101 but in a wider width 116 on the lower bottom surface of the side wall 114. When projection light is incident on the Fresnel lens 101 in this case, light is absorbed in the light absorber 104 formed widely on the lower bottom surface of the side wall 114 in the Fresnel lens 101, which makes the shade and largely reduces optical characteristics of the lens.

The present disclosure has been made for solving the above problem, and an object thereof is to provide a method of forming a film of a lens and a Fresnel lens capable of suppressing spreading of the light absorber formed in plural grooves.

In order to solve the above problem, a Fresnel lens including a Fresnel lens body, grooves formed on the lens surface of the Fresnel lens body and having bottom surfaces and inclined surfaces and a light absorber formed over the inclined surfaces and the bottom surfaces in which a contact angle at an end portion of the light absorber with respect to the bottom surface is larger than 70 degrees is used.

Moreover, a Fresnel lens including a Fresnel lens body, grooves formed on a lens surface of the Fresnel lens body and having bottom surfaces and inclined surfaces and a light absorber formed over the inclined surfaces and the bottom surfaces in which a layer having a thinner thickness than thicknesses of other parts is provided at an end portion of the light absorber is used.

Moreover, a Fresnel lens including a Fresnel lens body, grooves formed on the lens surface of the Fresnel lens body and having bottom surfaces and inclined surfaces and a light absorber formed over the inclined surfaces and the bottom surfaces in which an end portion of the light absorber has a corrugated shape is used.

Furthermore, a method of forming a film of a lens including the steps of coating inclined portions of a plurality of grooves formed on a lens surface with ink, fixing the ink and removing unnecessary portions of the ink by laser is used.

As described above, an ink-jet printing method according to the present disclosure can execute reciprocating printing by using a photocurable ink without changing conditions such as the UV radiation dose between forward and backward paths as well as without giving the feeling of strangeness in color for human eyes to thereby realize both tact and quality in the ink-jet printing method.

### BRIEF DESCRIPTION OF THE DRAWINGS

Fig. 1A is a perspective view of a related-art Fresnel lens, Fig. 1B is an enlarged cross-sectional view of groove portions of the Fresnel lens and Fig. 1C is a cross-sectional view obtained at the time of forming a light absorber in the groove portions of the Fresnel lens;
Fig. 2A is a cross-sectional view showing a coating method to sections by a related-art ink-jet method and Fig. 2B is a perspective view obtained at the time of coating side walls of a rectangular work by the related-art ink-jet method;
Fig. 3A is a cross-sectional view showing a method of forming a light absorber in groove portions by the related-art ink-jet method, and Fig. 3B is a cross-sectional view showing a method of forming the light absorber in groove portions by the related-art ink-jet method;
Fig. 4A is a cross-sectional view obtained at the time of forming a light absorber in groove portions by the related-art ink-jet method, and Fig. 4B is a top view obtained at the time of forming the light absorber in groove portions by the related-art ink-jet method;
Fig. 5A is a perspective view of a Fresnel lens according to an embodiment, Fig. 5B is a cross-sectional view obtained at the time of forming a light absorber in groove portions of the Fresnel lens according to the embodiment and Fig. 5C is a cross-sectional view obtained by removing the light absorber of the Fresnel lens according to the embodiment by laser;
Fig. 6A is a cross-sectional view showing a state just after the related-art Fresnel lens is coated with ink, Fig. 6B is a cross-sectional view obtained at the time of removing the light absorber of the Fresnel lens according to the embodiment by laser and Fig. 6C is a cross-sectional view obtained by removing the light absorber of the Fresnel lens according to the embodiment by laser;
Fig. 7A is a perspective view showing a state where the related-art Fresnel lens is coated with ink and Fig. 7B is a perspective view obtained at the time of removing the light absorber of the Fresnel lens according to the embodiment by laser; and
Fig. 8A to Fig. 8D are plan views showing examples of ink curves according to the embodiment.

### DESCRIPTION OF EMBODIMENTS

### (Structure of a Fresnel lens)

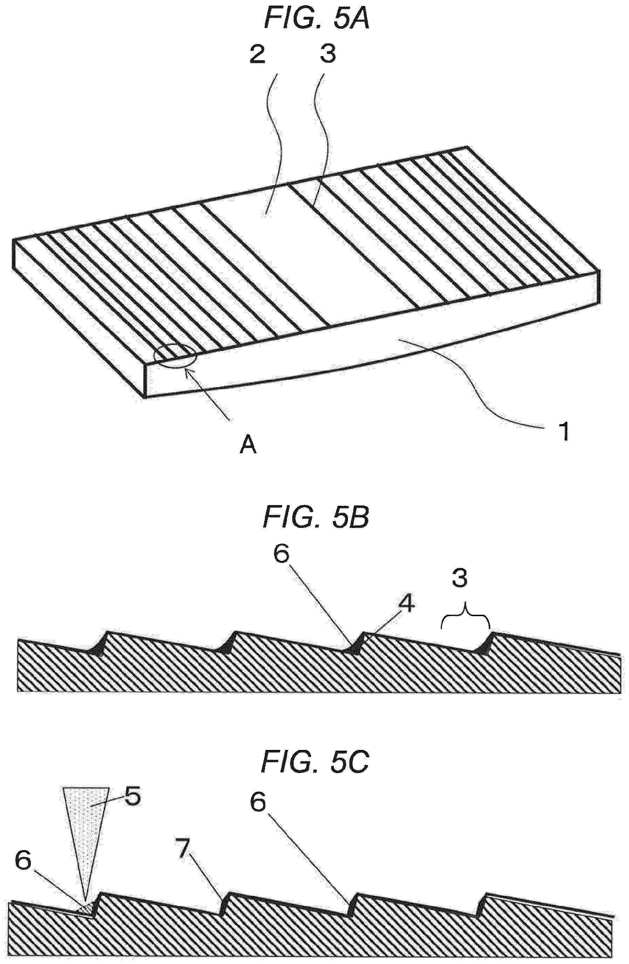

A Fresnel lens according to an embodiment is shown in a perspective view of Fig. 5A. A plurality of grooves 3 are formed in parallel straight lines on a lens surface 2 of a Fresnel lens 1. Fig. 5B and Fig. 5C are cross-sectional views obtained by enlarging a portion A of the lens surface 2. The grooves 3 have a V-shape in this case, however, the shape is not limited to the V-shape. One of both flat surfaces of the V-shape may be horizontal or vertical.

A base material and a thickness for forming the Fresnel lens 1 are not particularly limited but transparent materials with no coloring and turbidity are preferable in consideration of optical characteristics. An antireflection film may be formed on a surface of the lens according to need.

A method of forming the grooves 3 in the Fresnel lens 1 is not particularly limited, which includes a method of cutting a base material, an injection molding of a resin material, a transfer method by heating, etc. However, it is necessary to form the grooves 3 in accordance to a design value for securing optical characteristics. In this case, it is necessary that burrs or stains do not remain due to processing of the grooves 3.

In the structure of the grooves 3 in the Fresnel lens 1, the grooves 3 are not formed vertically but formed with a slightly inclined angle as shown in Fig. 5B and Fig. 5C to thereby allow the Fresnel lens 1 to have optical characteristics.

When the Fresnel lens 1 transmits given light, diffracted light is generated at inclined portions 4, or bottom surfaces and corner portions at apexes of the grooves 3. Accordingly, the inclined portions 4 are coated with ink 6 having light shielding property for suppressing diffracted light. The inclined portions 4 of the grooves 3 coated with the ink 6 are shown in Fig. 5B.

### (Coating Method of Fresnel Lens)

In the present embodiment, a process of forming a film by the ink 6 and a process of removing unnecessary portions by laser are included.

### <Ink>

As the ink 6, a black color having a high optical absorption rate is preferable. However, the color of the ink does not matter as far as diffracted light can be suppressed.

A material of the Fresnel lens 1 is a resin material. The ink 6 that hardly permeates and is hardly absorbed into the resin material is used.

Accordingly, an ultraviolet curable ink or a solvent-type ink containing a volatile solvent is preferably used as the ink 6. This is for suppressing spreading of the ink 6.

The ultraviolet curable ink is an ink containing a color pigment of black or the like such as carbon particles in an ultraviolet curable resin. After the Fresnel lens 1 is coated with the ink 6, the ink 6 is cured and fixed by ultraviolet rays. The ultraviolet curable resin with a peak curing wavelength in a range from 350 nm to 450 nm may be preferably used.

The solvent-type ink is an ink in which a color dye is mixed into the volatile solvent, for example, alcohol and the like. When the volatile ink solvent is used, the ink 6 can be fixed by volatilizing a solvent component after the inclined portions 4 are coated with the ink 6.

### <Laser Processing>

The coating of the inclined portions 4 with the ink 6 can be performed by various methods as described above. However, it is difficult to control a width of the ink 6 used for coating as the ink 6 spreads due to the accuracy of the coating method, the difference in surface condition between the ink 6 and the material of the Fresnel lens 1 and so on. Accordingly, the width of the ink is widened.

It is necessary to process a line width of the ink 6 to be 50 µm or less according to optical characteristics. Accordingly, excessive portions of the ink 6 are removed by a laser 5 as shown in Fig. 5C. The unnecessary portion of the ink 6 on the inclined portion 4 is irradiated with the laser 5 to remove the portion, thereby processing the ink to be a state of an ink 7.

As the laser 5, a green laser (wavelength 500 nm to 550 nm) is used for removing only the ink 6 without damaging the transparent material of the Fresnel lens 1. Accordingly, even when a region where the ink 6 does not exist is irradiated with the laser 5, the Fresnel lens 1 is hardly damaged by the laser 5.

An irradiation diameter of the laser 5 is reduced by an aperture of a lens, for example, a FΘ lens to be approximately φ20 µm to 50 µm. The narrowed laser 5 is radiated so as to correspond to a removal amount of the ink 6 in the inclined portion 4, thereby to remove the ink.

Cumulative irradiation time of the laser 5 for removing the ink 6 to be removed is adjusted in accordance with an amount of ink to be removed. However, when the amount of ink 6 to be removed is large and damage to the material of the Fresnel lens 1 around the ink 6 occurs, intervals between irradiation time and irradiation stop time are adjusted and pulse irradiation of the laser 5 is performed, thereby removing only the ink 6 by the laser 5 without damaging the Fresnel lens 1.

As for an alignment method between the irradiation position of the laser 5 and the groove 3, positional adjustment can be performed by providing a cross-shaped alignment mark on an outside of a lens effective region in the Fresnel lens 1. The shape of the alignment mark is not limited to the cross-shaped mark but may be a circle shape and the like as far as relative positional relation between the irradiation position on the laser device's side and the Fresnel lens can be secured by a recognition method using a camera or the like.

### <Details of Laser Processing>

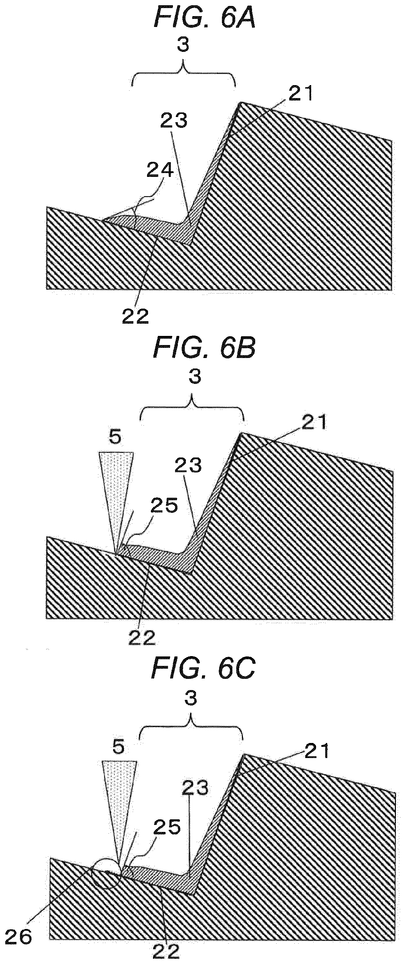

Cross-sectional shapes of the ink 7 processed by the laser 5 will be shown in Fig. 6A to Fig. 6C.

A case where inclined portions 21 of the grooves 3 are coated with an ink 23 is shown in Fig. 6A. An end portion of the ink 23 applied to the inclined portion 21 slightly protrudes due to surface tension. A contact angle 24 of the end portion with respect to a bottom surface 22 is 70 degrees or less.

The unnecessary portion of the ink 23 existing on the bottom surface 22 is removed by the laser 5. As a result, a contact angle 25 at the end portion of the ink becomes larger than 70 degrees as shown in Fig. 6B. The end portion is preferably a fracture surface with the contact angle 25 of 80 degrees or more.

The end portion of the ink 23 is held by the surface tension in Fig. 6A, and a film thickness is gradually reduced at the endmost portion of the ink 23. Accordingly, a portion where the projection light can be blocked and a portion where the projection light is not blocked are generated stepwise, therefore, it is difficult to obtain good contrast.

On the other hand, the contact angle 25 at the end portion of the ink 23 is 80 degrees or more in Fig. 6B. Accordingly, there is no portion where the film thickness of the ink 23 is gradually reduced, and there is an effect that the projection light can be blocked at the end portion of the ink 23 with good contrast.

In order to minimize heat damage at the time of removing the ink, it is preferable that an ink 26 with a thinner thickness than other parts remains as shown at a circle place of Fig. 6C. When the ink remains as a thin film with a thickness of approximately 1 µm, damage to the bottom surface 22 by the laser 5 is prevented, and further, the ink becomes hardly recognized by human eyes.

The film thickness at the endmost portion of the ink 23 in Fig. 6C can be controlled not in the portion where the film thickness is gradually reduced but in the portion where the projection light can be blocked and the portion transmitting light (portion of the thin ink 26 of approximately 1µm) in the same manner as described above.

The thickness of the thin ink 26 does not always have to be 1 µm as long as it is 5 µm or less. The thickness is preferably at least 0.1 µm or more to 5 µm or less.

### <Detailed Front Shape of Ink 7>

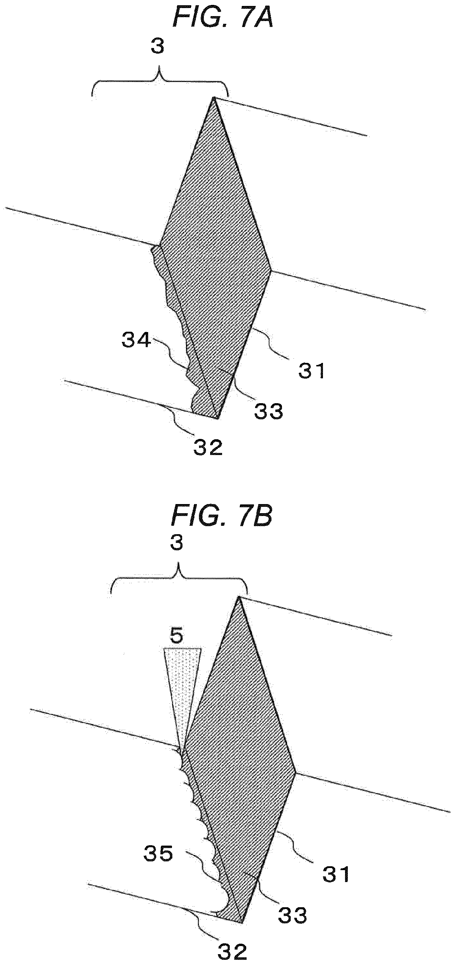

The detailed front shape of the ink 7 formed by the laser 5 will be explained with reference to Fig. 7A and Fig. 7B. In a case where an ink 33 is just applied to an inclined portion 31, an ink 34 on a bottom surface 32 makes a random curve due to surface tension as shown in Fig. 7A. It is difficult to control the ink 34 spreading on the bottom surface 32 and a width sometimes reaches 50 µm or more.

Accordingly, unnecessary ink protruding to the bottom surface 32 is removed by the laser 5 as shown in Fig. 7B. Accordingly, an ink curve 35 having regular cycles can be formed. It is preferable to form a line including one or more flection points or a curve formed of an aggregation of points. The reason of the above is as follows. The diffracted light may be slightly generated in the portion shielded by the ink and the portion where there is no ink and transmitting light. Accordingly, when a boundary line between the light shielding portion and the transmitting portion is a straight boundary line with a constant distance or a simple boundary line, it may be recognized as diffracted light by human eyes. Therefore, the ink curve 35 that is not a simple boundary line and includes regular cycles is formed. The ink curve 35 is provided with, for example, flection points or non-continuous points.

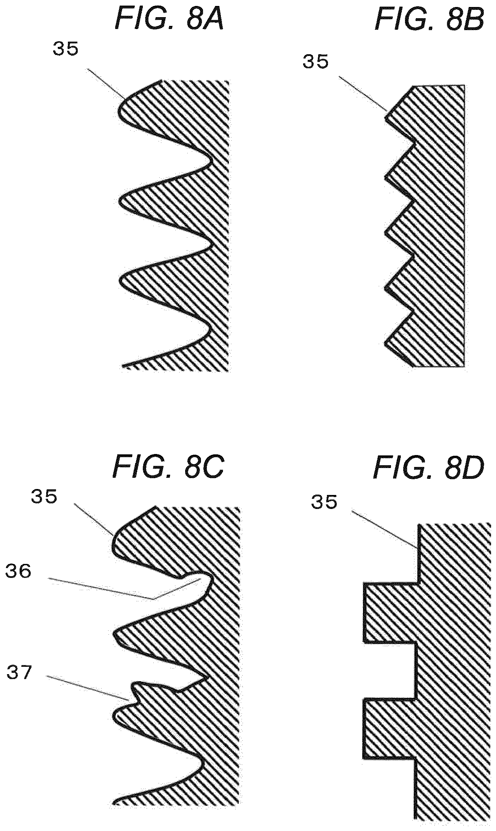

Examples of the ink curve 35 having regular cycles are shown in plan views of Fig. 8A to Fig. 8D.

In Fig. 8A, a curve is a cyclic line. In Fig. 8B, a curve is a cyclic polygonal line. In Fig. 8C, a curve is a cyclic curve with a notch 36 or a projection 37 at part of a cyclic curve. In Fig. 8D, a curve has a straight-line unevenness. All curves are not simple.

It is preferable to form a straight-line shape or free curves by moving the laser 5 on a prescribed track while performing irradiation of laser 5.

### <Effect>

As the applied ink can be removed without damaging the Fresnel lens in the method of producing the Fresnel lens according to the present disclosure, it is possible to coat only the side wall having an almost vertical shape and part of the bottom surface with the ink in a line width of 50 µm or less.

The method of producing the Fresnel lens according to the present disclosure can be widely used for forming a functional film or for performing a three-dimensional design decoration with respect to side walls of devices having a three-dimensional structure.

## Claims

1. A Fresnel lens comprising:
a Fresnel lens body;
grooves formed on a lens surface of the Fresnel lens body and having bottom surfaces and inclined surfaces; and
a light absorber formed over the inclined surfaces and the bottom surfaces,
wherein a contact angle at an end portion of the light absorber with respect to the bottom surface is larger than 70 degrees.

2. The Fresnel lens according to claim 1,
wherein a layer having a thinner thickness than thicknesses of other parts is provided at an end portion of the light absorber.

3. The Fresnel lens according to claim 2,
wherein the thickness of the thin layer is 5 µm or less.

4. The Fresnel lens according to any one of claim 1 to 3, wherein an end portion of the light absorber is a line having one or more flection points or a curve formed of an aggregation of points.

5. A method of forming a film of a lens comprising:
coating inclined portions of a plurality of grooves formed on a lens surface with ink;
fixing the ink; and
removing unnecessary portions of the ink by laser.

6. The method of forming the film of the lens according to claim 5,
wherein part of the unnecessary portions is allowed to remain in the step of removing the ink by the laser.

7. The method of forming the film of the lens according to claim 5 or 6,
wherein a contact angle at an end portion of the ink is larger than 70 degrees in the step of removing the ink by the laser.

8. The method of forming the film of the lens according to any one of claim 5 to 7,
wherein the laser is a green laser.

9. The method of forming the film of the lens according to any one of claim 5 to 8,
wherein the ink is an ultraviolet curable ink containing a pigment component with a particle diameter of 10 nm to 1 µm.

10. The method of forming the film of the lens according to claim 9,
wherein the pigment component contains carbon particles.

11. The method of forming the film of the lens according to any one of claim 5 to 8,
wherein the ink is a volatile-dye solvent ink.
